# EUROPÄISCHE PATENTSCHRIFT

(11) **EP 3 565 085 B1**
(45) Veröffentlichungstag und Bekanntmachung des Hinweises auf die Patenterteilung: **13.07.2022**
(21) Anmeldenummer: 19171831.1
(22) Anmeldetag: 30.04.2019
(51) Int. Cl.: H02J 7/35, H02J 9/00, H02J 50/10

(54) **AUTONOMES DRAHTLOSES SENSORGERÄT MIT REDUZIERTEM ENERGIEVERBRAUCH**
AUTONOMOUS WIRELESS SENSOR DEVICE WITH REDUCED POWER CONSUMPTION
APPAREIL DE DÉTECTION AUTONOME SANS FIL À CONSOMMATION D'ÉNERGIE RÉDUITE

(30) Priorität: 04.05.2018 DE 102018110784
(43) Veröffentlichungstag der Anmeldung: 06.11.2019
(73) Patentinhaber: ABB Schweiz AG, 5400 Baden (CH)
(72) Erfinder: Ahrend, Ulf, 76185 Karlsruhe (DE); Decker, Andreas, 49377 Vechta (DE); Gebhardt, Jörg, 55130 Mainz (DE); Sosale, Guruprasad, 80997 München (DE); Kaul, Holger, 68165 Mannheim (DE); Mendoza, Francisco, 69198 Schriesheim (DE); Rodenbusch-Mohr, Thomas, 68161 Mannheim (DE); Beniston, John, 69231 Rauenberg (DE)
(74) Vertreter: Zimmermann & Partner Patentanwälte mbB

(56) Entgegenhaltungen:
- US-A1- 2005 017 602
- US-A1- 2010 060 231
- US-A1- 2015 008 872

## Beschreibung

### Technisches Gebiet der Erfindung

Die Erfindung betrifft ein autonomes drahtloses Sensorgerät.

### Stand der Technik

Autonome drahtlose Sensorgeräte sind bereits bekannt. Sie weisen eine Energiequelle und Energiesenken auf. Bei der Energiequelle handelt es sich um eine Primärbatterie oder um einen Energiesammler. Energiesammler werden auch als Harvester bezeichnet. Zu diesen Harvestern gehören beispielsweise Photovoltaik-Harvester, Thermo-Harvester und induktive Harvester. Harvester-Energiequellen sind in den meisten Fällen über einen Powermanager und einen wiederaufladbaren Energiespeicher mit den Energiesenken des jeweiligen Sensorgerätes verbunden. Dieser Powermanager ist unter anderem dazu vorgesehen, eine Impedanzanpassung durchzuführen und eine Spannungsumsetzung vorzunehmen. Der Leistungsverbrauch eines autonomen drahtlosen Sensorgerätes kann aufgeteilt werden in aktive Leistung, die vom drahtlosen Sensorgerät benötigt wird, und Verlustleistung, die dann verbraucht wird, wenn das drahtlose Sensorgerät heruntergefahren ist und auf ein Ereignis wartet.

Aus der US 2015/0008872 A1 ist eine autonome drahtlose Sensorvorrichtung bekannt, die eine Energiequelle, Energiesenken und Schaltmittel aufweist, mittels derer die Energieversorgung von Energiesenken unterbrechbar ist. Eine Reduzierung des Energieverbrauchs wird dadurch erzielt, dass einer oder mehrere der Energiesenken in den Schlafmodus gebracht werden.

Aus der US 2005/0017602 A1 ist eine Vorrichtung bekannt, die eine Energiequelle, eine Energiesenke und Schaltmittel aufweist, mittels derer die Energieversorgung der Energiesenke unterbrechbar ist.

Aus der US 2010/0060231 A1 ist ein autonomes drahtloses Sensorgerät bekannt, welches eine Energiequelle, Energiesenken und Schaltmittel aufweist, mittels derer die Energieversorgung von Energiesenken unterbrechbar ist. In dieser Entgegenhaltung ist offenbart, dass die Energieversorgung von Energiesenken dann unterbrochen werden kann, wenn zu wenig gesammelte Energie zur Verfügung steht, um die Energiesenken mit Energie versorgen. Des Weiteren offenbart diese Entgegenhaltung, dass die Energiesenken in einen Schlafmodus versetzt werden können, wenn zu wenig gesammelte Energie zur Verfügung steht, um die Energiesenken mit Energie zu versorgen.

### Zusammenfassung der Erfindung

Die Aufgabe der Erfindung besteht darin, ein autonomes drahtloses Sensorgerät anzugeben, dessen Energieverbrauch reduziert ist.

Diese Aufgabe wird durch ein autonomes drahtloses Sensorgerät mit den im Anspruch 1 angegebenen Merkmalen gelöst.

Ein erfindungsgemäßes autonomes drahtloses Sensorgerät weist eine Energiequelle, Energiesenken und Schaltmittel auf, mittels derer die Energieversorgung von Energiesenken unterbrechbar ist, wobei die Schaltmittel eine Steuereinheit aufweisen, die zur Steuerung der Unterbrechung der Energieversorgung von momentan nicht benötigten Energiesenken ausgebildet ist, wobei die Steuerung des Weiteren dazu ausgebildet ist, die Energieversorgung der momentan nicht benötigten Energiesenken durch eine Deaktivierung eines der jeweils nicht benötigten Energiesenke vorgeschalteten Gleichspannungswandlers zu unterbrechen.

Die Vorteile der Erfindung bestehen insbesondere darin, dass die Leistungseffizienz eines mit den erfindungsgemäßen Merkmalen ausgestatteten autonomen drahtlosen Sensorgerätes im Vergleich zu bekannten autonomen drahtlosen Sensorgeräten verbessert ist. Folglich benötigt ein mit den erfindungsgemäßen Merkmalen ausgestattetes autonomes drahtloses Sensorgerät weniger Leistung von der Energiequelle. Dies reduziert die Kosten eines autonomen drahtlosen Sensorgerätes, da kleinere Energiequellen und in dem Fall, dass ein Energiesammler als Energiequelle verwendet wird, auch kleinere wiederaufladbare Energiespeicher verwendet werden können.

Diese Vorteile werden im Wesentlichen dadurch erzielt, dass die Energieversorgung momentan nicht benötigter Energiesenken, beispielsweise momentan nicht benötigter Sensoren, momentan nicht benötigter Datenspeicher oder momentan nicht benötigter Messschaltungen des autonomen drahtlosen Sensorgerätes, unterbrochen wird und erst dann wieder hergestellt wird, wenn die nicht benötigte Energiesenke wieder benötigt wird.

Gemäß der Erfindung weisen die Schaltmittel eine Steuereinheit auf, die zur Steuerung der Unterbrechung der Energieversorgung der momentan nicht benötigten Energiesenken ausgebildet ist. Dieser Steuereinheit liegen Informationen darüber vor, wann welche Energiesenke benötigt wird und wann sie nicht benötigt wird.

Gemäß einer Ausführungsform der Erfindung weisen die Schaltmittel einen oder mehrere Schalter auf.

Gemäß einer Ausführungsform der Erfindung ist den Energiesenken jeweils einer der Schalter vorgeschaltet.

Gemäß der Erfindung ist die Steuereinheit dazu ausgebildet, die Energieversorgung der momentan nicht benötigten Energiesenken durch eine Deaktivierung eines der jeweils nicht benötigten Energiesenke vorgeschalteten Gleichspannungswandlers zu unterbrechen. In diesem Falle sind den Energiesenken vorgeschaltete Schalter entbehrlich.

Gemäß einer Ausführungsform ist die Steuereinheit dazu ausgebildet, einen zur Unterbrechung der Energieversorgung momentan nicht benötigter Energiesenken ausgebildeten integrierten Schaltkreis anzusteuern.

Gemäß einer Ausführungsform der Erfindung ist den Energiesenken eine mehrere Gleichspannungswandler aufweisende Gleichspannungswandlerbaugruppe vorgeschaltet, wobei jede der Energiesenken an den Ausgang eines der Gleichspannungswandler angeschlossen ist.

Gemäß einer Ausführungsform der Erfindung weist die Gleichspannungswandlerbaugruppe zwei oder mehr in Reihe geschaltete Gleichspannungswandler auf. Gemäß einer Ausführungsform der Erfindung weist die Gleichspannungswandlerbaugruppe zwei oder mehr parallel zueinander geschaltete Gleichspannungswandler auf.

Gemäß einer Ausführungsform der Erfindung ist die Energiequelle eine Primärbatterie.

Gemäß einer Ausführungsform der Erfindung ist die Energiequelle ein Energiesammler.

Gemäß einer Ausführungsform der Erfindung weist das autonome drahtlose Sensorgerät einen an den Energiesammler angeschlossenen Powermanager und einen an den Powermanager angeschlossenen wiederaufladbaren Energiespeicher auf, wobei der wiederaufladbare Energiespeicher über die Gleichspannungswandlerbaugruppe direkt oder über jeweils einen einer Energiesenke vorgeschalteten Schalter an die jeweilige Energiesenke angeschlossen ist.

Gemäß einer Ausführungsform der Erfindung weist der Powermanager Impedanzanpassungsmittel und einen Gleichspannungswandler auf und der Energiesammler ist über die Impedanzanpassungsmittel und den Gleichspannungswandler mit dem wiederaufladbaren Energiespeicher verbunden.

Gemäß einer Ausführungsform der Erfindung liegt der Gesamtenergiebedarf der Energiesenken im Bereich von 10 µW bis 1 mW.

Gemäß einer Ausführungsform betrifft die Erfindung eine Verwendung eines autonomen drahtlosen Sensorgerätes im Bereich der Gebäudeautomation.

### Kurze Beschreibung der Zeichnungen

Die Figur 1 zeigt eine Blockdarstellung eines ersten Ausführungsbeispiels für ein autonomes drahtloses Sensorgerät gemäß der Erfindung.
Die Figur 2 zeigt eine Blockdarstellung eines zweiten Ausführungsbeispiels für ein autonomes drahtloses Sensorgerät gemäß der Erfindung.
Die Figur 3 zeigt eine Blockdarstellung eines dritten Ausführungsbeispiels für ein autonomes drahtloses Sensorgerät gemäß der Erfindung.
Die Figur 4 zeigt eine Blockdarstellung eines vierten Ausführungsbeispiels für ein autonomes drahtloses Sensorgerät gemäß der Erfindung.
Die Figur 5 zeigt eine Blockdarstellung einer alternativen Ausführungsform für die Abschaltung der Energieversorgung momentan nicht benötigter Energiesenken.

### Ausführliche Beschreibung der Erfindung anhand der Zeichnungen

Ein autonomes drahtloses Sensorgerät weist mehrere Energiesenken auf. Diese Energiesenken benötigen zu ihrem Betrieb eine Versorgungsgleichspannung, die unter Verwendung einer Energiequelle bereitgestellt wird. Mittels der vorliegenden Erfindung wird erreicht, dass der Energiebedarf des autonomen drahtlosen Sensorgerätes im Vergleich zu bekannten autonomen drahtlosen Sensorgeräten reduziert ist. Diese Reduzierung des Energiebedarfs des autonomen drahtlosen Sensorgerätes wird dadurch erreicht, dass die Energieversorgung momentan nicht benötigter Energiesenken des autonomen drahtlosen Sensorgerätes unterbrochen wird und erst dann wieder aktiviert wird, wenn die jeweilige Funktionalität wieder benötigt wird.

Zu den genannten Energiesenken eines autonomen drahtlosen Sensorgerätes gehören insbesondere verschiedene Sensoren, Datenspeicher und Messschaltungen. Zu den Sensoren gehören beispielsweise ein Temperatursensor, ein Drucksensor, ein Feuchtigkeitssensor, ein Helligkeitssensor, ein Gassensor, ein Partikelsensor, ein akustischer Sensor, ein Magnetfeldsensor, ein Bewegungsdetektor und/oder ein oder mehrere mikroelektromechanische weitere Sensoren. Beispielsweise werden bestimmte Datenspeicher des autonomen drahtlosen Sensorgerätes nur dann benötigt, wenn ein Online-Software-Update eines Arbeitsprogrammes erfolgen soll. Die Energieversorgung dieser Datenspeicher erfolgt nur für den Zeitraum dieses Online-Software-Updates. Ist dieses Online-Software-Update beendet, dann wird die Energieversorgung dieser Datenspeicher wieder unterbrochen.

Ein Sensorgerät gemäß der Erfindung ist vorzugsweise zu einer Verwendung im Bereich der Gebäudeautomation ausgebildet. Bei einem derartigen Sensorgerät handelt es sich um ein Niedrigenergiegerät, dessen gesamter Leistungsbedarf im Bereich von 10 µW bis 1 mW liegt.

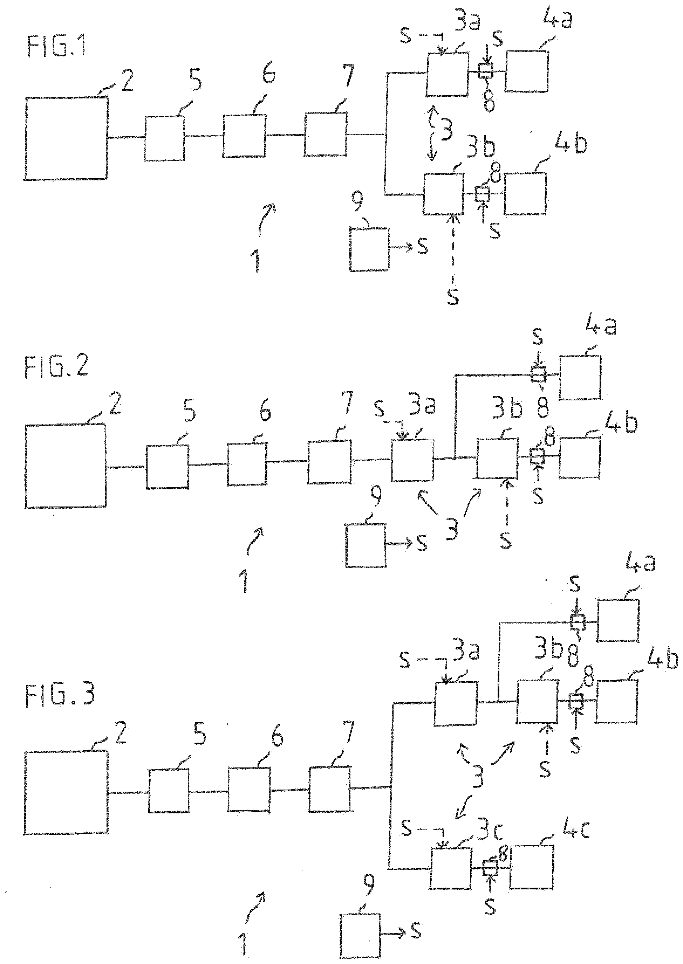

Die Figur 1 zeigt eine Blockdarstellung eines ersten Ausführungsbeispiels für ein autonomes drahtloses Sensorgerät gemäß der Erfindung. Dieses Sensorgerät 1 weist eine Energiequelle 2, eine Gleichspannungswandlerbaugruppe 3 und Energiesenken 4a und 4b auf. Bei der Energiequelle 2 handelt es sich um einen Energiesammler, der beim dargestellten Ausführungsbeispiel Photovoltaikzellen aufweist. Am Ausgang der Energiequelle 2 steht eine Gleichspannung oder einer gleichgerichtete Wechselspannung zur Verfügung. Diese Gleichspannung wird über einen Powermanager, der Impedanzanpassungsmittel 5 und einen ersten Gleichspannungswandler 6 aufweist, einem wiederaufladbaren Energiespeicher 7 zur Verfügung gestellt und zu dessen Aufladung verwendet. Mittels der Impedanzanpassungsmittel 5 wird eine Anpassung des Innenwiderstandes des Energiesammlers an den Innenwiderstand des ersten Gleichspannungswandlers durchgeführt. Die am Ausgang des ersten Gleichspannungswandlers zur Verfügung gestellte Gleichspannung wird zur Aufladung des wiederaufladbaren Energiespeichers 7 verwendet. Bei diesem wiederaufladbaren Energiespeicher handelt es sich vorzugsweise um eine wiederaufladbare Batterie, beispielsweise eine Lithium-Ionen-Batterie, oder um einen Kondensatoren, beispielsweise sogenannte Super-Caps, aufweisenden Energiespeicher.

An den Ausgang des wiederaufladbaren Energiespeichers 7 ist eine Gleichspannungswandlerbaugruppe 3 angeschlossen, die beim gezeigten Ausführungsbeispiel zwei parallel zueinander angeordnete Gleichspannungswandler 3a und 3b aufweist. Jeder dieser Gleichspannungswandler stellt an seinem Ausgang eine andere Gleichspannung zur Verfügung.

An den Ausgang des Gleichspannungswandlers 3a ist eine Energiesenke 4a angeschlossen, an den Ausgang des Gleichspannungswandlers 3b eine Energiesenke 4b. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b.

Die minimal notwendige Versorgungsgleichspannung der Energiesenke 4a ist von der minimal notwendigen Versorgungsgleichspannung der Energiesenke 4b verschieden.

Folglich werden bei dem in der Figur 1 gezeigten Ausführungsbeispiel parallel zueinander vorgesehene Gleichspannungswandler dazu verwendet, eine von einem wiederaufladbaren Energiespeicher 7 bereitgestellte Gleichspannung in mehrere verschiedene Gleichspannungen umzuwandeln, wobei es sich bei diesen verschiedenen Gleichspannungen um von verschiedenen Bauteilen eines Sensorgerätes minimal benötigte Versorgungsgleichspannungen handelt.

Alternativ zu dem in der Figur 1 dargestellten Ausführungsbeispiel können an die Ausgänge der Gleichspannungswandler 3a und 3b auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Eine weitere Alternative zu dem in der Figur 1 dargestellten Ausführungsbeispiel besteht darin, drei oder mehr parallel zueinander angeordnete Gleichspannungswandler vorzusehen, um drei oder mehr verschiedene Gleichspannungen bereitzustellen, die jeweils einer oder mehreren Energiesenken bereitgestellt werden, um diese mit der jeweils benötigten minimalen Versorgungsgleichspannung zu versorgen.

Des Weiteren ist aus der Figur 1 ersichtlich, dass zwischen dem Gleichspannungswandler 3a und der Energiesenke 4a ein Schalter 8 vorgesehen ist, welchem ein Steuersignal s zugeführt wird. Dieses Steuersignal s wird von einer Steuereinheit 9 bereitgestellt.

Ferner ist aus der Figur 1 ersichtlich, dass zwischen dem Gleichspannungswandler 3b und der Energiesenke 4b ein weiterer Schalter 8 vorgesehen ist, welchem ebenfalls ein von der Steuereinheit 9 bereitgestelltes Steuersignal s zugeführt wird.

Diese Steuersignale s werden von der Steuereinheit 9 dann bereitgestellt, wenn die jeweilige Energiesenke momentan nicht benötigt wird. So wird das Steuersignal s für den der Energiesenke 4a vorgeschalteten Schalter 8 dann bereitgestellt, wenn die Energiesenke 4a momentan nicht benötigt wird. Durch dieses Steuersignal s wird die Energieversorgung der Energiesenke 4a unterbrochen. Die Energieversorgung der Energiesenke 4a wird erst dann wieder aufgenommen, wenn die Energiesenke 4a wieder benötigt wird. Das Steuersignal s für den der Energiesenke 4b vorgeschalteten Schalter 8 dann bereitgestellt, wenn die Energiesenke 4b momentan nicht benötigt wird. Durch dieses Steuersignal s wird die Energieversorgung der Energiesenke 4b unterbrochen. Die Energieversorgung der Energiesenke 4b wird erst dann wieder aufgenommen, wenn die Energiesenke 4b wieder benötigt wird.

Durch diese Unterbrechung der Energieversorgung momentan nicht benötigter Energiesenken wird der Gesamtenergiebedarf des autonomen drahtlosen Sensorgerätes in vorteilhafter Weise reduziert.

Alternativ zu der Verwendung der Schalter 8 kann die Unterbrechung der Energieversorgung momentan nicht benötigter Energiesenken erfindungsgemäß auch dadurch vorgenommen werden, dass der der momentan nicht benötigten Energiesenke vorgeschaltete Gleichspannungswandler deaktiviert wird. Dies ist in der Figur 1 mit gestrichelten Linien angedeutet. So ist ersichtlich, dass bei dieser alternativen Ausführungsform dem der Energiesenke 4a vorgeschalteten Gleichspannungswandler 3a ein Steuersignal s zugeführt wird. Des Weiteren ist ersichtlich, dass bei dieser alternativen Ausführungsform dem der Energiesenke 4b vorgeschalteten Gleichspannungswandler 3b ebenfalls ein Steuersignal s zugeführt wird. Das Steuersignal s für den der Energiesenke 4a vorgeschalteten Gleichspannungswandler 3a wird von der Steuereinheit 9 dann bereitgestellt, wenn die Energiesenke 4a momentan nicht benötigt wird. Durch dieses Steuersignal s wird der Gleichspannungswandler 3a deaktiviert. Dadurch wird auch die Energieversorgung der Energiesenke 4a unterbrochen. Die Energieversorgung der Energiesenke 4a wird durch eine Reaktivierung des Gleichspannungswandlers 3a erst dann wieder aufgenommen, wenn die Energiesenke 4a wieder benötigt wird. Das Steuersignal s für den der Energiesenke 4b vorgeschalteten Gleichspannungswandler 3b wird von der Steuereinheit 9 dann bereitgestellt, wenn die Energiesenke 4b momentan nicht benötigt wird. Durch dieses Steuersignal s wird der Gleichspannungswandler 3b deaktiviert. Dadurch wird auch die Energieversorgung der Energiesenke 4b unterbrochen. Die Energieversorgung der Energiesenke 4b wird durch eine Reaktivierung des Gleichspannungswandlers 3b erst dann wieder aufgenommen, wenn die Energiesenke 4b wieder benötigt wird.

Die Energieversorgung der Steuerschaltung 9 ist in der Figur 1 nicht dargestellt. Sie kann beispielsweise direkt von der Energiequelle 2 aus erfolgen.

Die Figur 2 zeigt eine Blockdarstellung eines zweiten Ausführungsbeispiels für ein autonomes drahtloses Sensorgerät gemäß der Erfindung. Dieses Sensorgerät 1 weist eine Energiequelle 2, eine Gleichspannungswandlerbaugruppe 3 und Energiesenken 4a und 4b auf. Bei der Energiequelle 2 handelt es sich um einen Energiesammler, der beim dargestellten Ausführungsbeispiel Photovoltaikzellen aufweist. Am Ausgang der Energiequelle 2 steht eine Gleichspannung oder einer gleichgerichtete Wechselspannung zur Verfügung. Diese Gleichspannung wird über einen Powermanager, der Impedanzanpassungsmittel 5 und einen ersten Gleichspannungswandler 6 aufweist, einem wiederaufladbaren Energiespeicher 7 zur Verfügung gestellt und zu dessen Aufladung verwendet. Mittels der Impedanzanpassungsmittel 5 wird eine Anpassung des Innenwiderstandes des Energiesammlers an den Innenwiderstand des ersten Gleichspannungswandlers durchgeführt. Die am Ausgang des ersten Gleichspannungswandlers zur Verfügung gestellte Gleichspannung wird zur Aufladung des wiederaufladbaren Energiespeichers 7 verwendet. Bei diesem wiederaufladbaren Energiespeicher handelt es sich vorzugsweise um eine wiederaufladbare Batterie, beispielsweise eine Lithium-Ionen-Batterie, oder um einen Kondensatoren, beispielsweise sogenannte Super-Caps, aufweisenden Energiespeicher.

An den Ausgang des wiederaufladbaren Energiespeichers 7 ist eine Gleichspannungswandlerbaugruppe 3 angeschlossen, die beim gezeigten Ausführungsbeispiel zwei in Reihe hintereinander angeordnete Gleichspannungswandler 3a und 3b aufweist. Jeder dieser Gleichspannungswandler stellt an seinem Ausgang eine andere Gleichspannung zur Verfügung, wobei der Gleichspannungswandler 3b die vom Gleichspannungswandler 3a bereitgestellte Gleichspannung als Eingangsspannung verwendet und diese in eine andere Gleichspannung wandelt, die sich von der vom Gleichspannungswandler 3a bereitgestellten Gleichspannung unterscheidet.

An den Ausgang des Gleichspannungswandlers 3a ist eine Energiesenke 4a angeschlossen, an den Ausgang des Gleichspannungswandlers 3b eine Energiesenke 4b. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b.

Die minimal notwendige Versorgungsgleichspannung der Energiesenke 4a ist von der minimal notwendigen Versorgungsgleichspannung der Energiesenke 4b verschieden.

Folglich werden bei dem in der Figur 2 gezeigten Ausführungsbeispiel in Reihe hintereinander geschaltete Gleichspannungswandler dazu verwendet, eine von einem wiederaufladbaren Energiespeicher 7 bereitgestellte Gleichspannung in mehrere verschiedene Gleichspannungen umzuwandeln, wobei es sich bei diesen verschiedenen Gleichspannungen um von verschiedenen Bauteilen eines Sensorgerätes minimal benötigte Versorgungsgleichspannungen handelt.

Alternativ zu dem in der Figur 2 dargestellten Ausführungsbeispiel können an die Ausgänge der Gleichspannungswandler 3a und 3b auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Eine weitere Alternative zu dem in der Figur 2 dargestellten Ausführungsbeispiel besteht darin, drei oder mehr in Reihe hintereinander geschaltete Gleichspannungswandler vorzusehen, um drei oder mehr verschiedene Gleichspannungen bereitzustellen, die jeweils einer oder mehreren Energiesenken bereitgestellt werden, um diese mit der jeweils benötigten minimalen Versorgungsgleichspannung zu versorgen.

Des Weiteren ist aus der Figur 2 ersichtlich, dass zwischen dem Gleichspannungswandler 3a und der Energiesenke 4a ein Schalter 8 vorgesehen ist, welchem ein Steuersignal s zugeführt wird. Dieses Steuersignal s wird von einer Steuereinheit 9 bereitgestellt.

Ferner ist aus der Figur 2 ersichtlich, dass zwischen dem Gleichspannungswandler 3b und der Energiesenke 4b ein weiterer Schalter 8 vorgesehen ist, welchem ebenfalls ein von der Steuereinheit 9 bereitgestelltes Steuersignal s zugeführt wird.

Diese Steuersignale s werden von der Steuereinheit 9 dann bereitgestellt, wenn die jeweilige Energiesenke momentan nicht benötigt wird. So wird das Steuersignal s für den der Energiesenke 4a vorgeschalteten Schalter 8 dann bereitgestellt, wenn die Energiesenke 4a momentan nicht benötigt wird. Durch dieses Steuersignal s wird die Energieversorgung der Energiesenke 4a unterbrochen. Die Energieversorgung der Energiesenke 4a wird erst dann wieder aufgenommen, wenn die Energiesenke 4a wieder benötigt wird. Das Steuersignal s für den der Energiesenke 4b vorgeschalteten Schalter 8 wird dann bereitgestellt, wenn die Energiesenke 4b momentan nicht benötigt wird. Durch dieses Steuersignal s wird die Energieversorgung der Energiesenke 4b unterbrochen. Die Energieversorgung der Energiesenke 4b wird erst dann wieder aufgenommen, wenn die Energiesenke 4b wieder benötigt wird.

Durch diese Unterbrechung der Energieversorgung momentan nicht benötigter Energiesenken wird der Gesamtenergiebedarf des autonomen drahtlosen Sensorgerätes in vorteilhafter Weise reduziert.

Alternativ zu der Verwendung der Schalter 8 kann die Unterbrechung der Energieversorgung momentan nicht benötigter Energiesenken erfindungsgemäß auch dadurch vorgenommen werden, dass der der momentan nicht benötigten Energiesenke vorgeschaltete Gleichspannungswandler deaktiviert wird. Dies ist in der Figur 2 mit gestrichelten Linien angedeutet. So ist ersichtlich, dass bei dieser alternativen Ausführungsform dem der Energiesenke 4a vorgeschalteten Gleichspannungswandler 3a ein Steuersignal s zugeführt wird. Des Weiteren ist ersichtlich, dass bei dieser alternativen Ausführungsform dem der Energiesenke 4b vorgeschalteten Gleichspannungswandler 3b ebenfalls ein Steuersignal s zugeführt wird. Das Steuersignal s für den der Energiesenke 4a vorgeschalteten Gleichspannungswandler 3a wird von der Steuereinheit 9 dann bereitgestellt, wenn die Energiesenke 4a und auch die Energiesenke 4b momentan nicht benötigt werden. Durch dieses Steuersignal s wird der Gleichspannungswandler 3a deaktiviert. Dadurch wird auch die Energieversorgung der Energiesenken 4a und 4b unterbrochen. Die Energieversorgung der Energiesenken 4a und 4b wird durch eine Reaktivierung des Gleichspannungswandlers 3a erst dann wieder aufgenommen, wenn die Energiesenken 4a und 4b wieder benötigt werden. Das Steuersignal s für den der Energiesenke 4b vorgeschalteten Gleichspannungswandler 3b wird von der Steuereinheit 9 dann bereitgestellt, wenn die Energiesenke 4b momentan nicht benötigt wird. Durch dieses Steuersignal s wird der Gleichspannungswandler 3b deaktiviert. Dadurch wird die Energieversorgung der Energiesenke 4b unterbrochen. Die Energieversorgung der Energiesenke 4b wird durch eine Reaktivierung des Gleichspannungswandlers 3b erst dann wieder aufgenommen, wenn die Energiesenke 4b wieder benötigt wird. Dies ermöglicht es, die Energieversorgung der Energiesenke 4b bei Aufrechterhaltung der Energieversorgung der Energiesenke 4a zu unterbrechen.

Die Energieversorgung der Steuerschaltung 9 ist in der Figur 2 nicht dargestellt. Sie kann beispielsweise direkt von der Energiequelle 2 aus erfolgen.

Die Figur 3 zeigt eine Blockdarstellung eines dritten Ausführungsbeispiels für ein autonomes drahtloses Sensorgerät gemäß der Erfindung. Dieses Sensorgerät 1 weist eine Energiequelle 2, eine Gleichspannungswandlerbaugruppe 3 und Energiesenken 4a, 4b und 4c auf. Bei der Energiequelle 2 handelt es sich um einen Energiesammler, der beim dargestellten Ausführungsbeispiel Photovoltaikzellen aufweist. Am Ausgang der Energiequelle 2 steht eine Gleichspannung oder einer gleichgerichtete Wechselspannung zur Verfügung. Diese Gleichspannung wird über einen Powermanager, der Impedanzanpassungsmittel 5 und einen ersten Gleichspannungswandler 6 aufweist, einem wiederaufladbaren Energiespeicher 7 zur Verfügung gestellt und zu dessen Aufladung verwendet. Mittels der Impedanzanpassungsmittel 5 wird eine Anpassung des Innenwiderstandes des Energiesammlers an den Innenwiderstand des ersten Gleichspannungswandlers durchgeführt. Die am Ausgang des ersten Gleichspannungswandlers zur Verfügung gestellte Gleichspannung wird zur Aufladung des wiederaufladbaren Energiespeichers 7 verwendet. Bei diesem wiederaufladbaren Energiespeicher handelt es sich vorzugsweise um eine wiederaufladbare Batterie, beispielsweise eine Lithium-Ionen-Batterie, oder um einen Kondensatoren, beispielsweise sogenannte Super-Caps, aufweisenden Energiespeicher.

An den Ausgang des wiederaufladbaren Energiespeichers 7 ist eine Gleichspannungswandlerbaugruppe 3 angeschlossen, die beim gezeigten Ausführungsbeispiel drei Gleichspannungswandler 3a, 3b und 3c aufweist. Jeder dieser Gleichspannungswandler stellt an seinem Ausgang eine andere Gleichspannung zur Verfügung, wobei der Gleichspannungswandler 3b die vom Gleichspannungswandler 3a bereitgestellte Gleichspannung als Eingangsspannung verwendet und diese in eine andere Gleichspannung wandelt, die sich von der vom Gleichspannungswandler 3a bereitgestellten Gleichspannung und auch von der vom Gleichspannungswandler 3c bereitgestellten Gleichspannung unterscheidet.

An den Ausgang des Gleichspannungswandlers 3a ist eine Energiesenke 4a angeschlossen, an den Ausgang des Gleichspannungswandlers 3b eine Energiesenke 4b und an den Ausgang des Gleichspannungswandlers 3c eine Energiesenke 4c. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b. Die am Ausgang des Gleichspannungswandlers 3c bereitgestellte Gleichspannung entspricht der minimal notwendigen Versorgungsgleichspannung der Energiesenke 4c.

Die minimal notwendigen Versorgungsgleichspannungen der Energiesenken 4a, 4b und 4c sind voneinander verschieden.

Folglich werden bei dem in der Figur 3 gezeigten Ausführungsbeispiel sowohl in Reihe hintereinander geschaltete Gleichspannungswandler als auch parallel zueinander angeordnete Gleichspannungswandler dazu verwendet, eine von einem wiederaufladbaren Energiespeicher 7 bereitgestellte Gleichspannung in mehrere verschiedene Gleichspannungen umzuwandeln, wobei es sich bei diesen verschiedenen Gleichspannungen um von verschiedenen Bauteilen eines Sensorgerätes minimal benötigte Versorgungsgleichspannungen handelt.

Alternativ zu dem in der Figur 3 dargestellten Ausführungsbeispiel können an die Ausgänge der Gleichspannungswandler 3a, 3b und 3c auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Des Weiteren ist aus der Figur 3 ersichtlich, dass zwischen dem Gleichspannungswandler 3a und der Energiesenke 4a ein Schalter 8 vorgesehen ist, welchem ein Steuersignal s zugeführt wird. Dieses Steuersignal s wird von einer Steuereinheit 9 bereitgestellt.

Ferner ist aus der Figur 3 ersichtlich, dass zwischen dem Gleichspannungswandler 3b und der Energiesenke 4b ein weiterer Schalter 8 vorgesehen ist, welchem ebenfalls ein von der Steuereinheit 9 bereitgestelltes Steuersignal s zugeführt wird. Darüber hinaus ist aus der Figur 3 ersichtlich, dass zwischen dem Gleichspannungswandler 3c und der Energiesenke 4c ein weiterer Schalter 8 vorgesehen ist, welchem ebenfalls ein von der Steuereinheit 9 bereitgestelltes Steuersignal s zugeführt wird.

Diese Steuersignale s werden von der Steuereinheit 9 dann bereitgestellt, wenn die jeweilige Energiesenke momentan nicht benötigt wird. So wird das Steuersignal s für den der Energiesenke 4a vorgeschalteten Schalter 8 dann bereitgestellt, wenn die Energiesenke 4a momentan nicht benötigt wird. Durch dieses Steuersignal s wird die Energieversorgung der Energiesenke 4a unterbrochen. Die Energieversorgung der Energiesenke 4a wird erst dann wieder aufgenommen, wenn die Energiesenke 4a wieder benötigt wird. Das Steuersignal s für den der Energiesenke 4b vorgeschalteten Schalter 8 wird dann bereitgestellt, wenn die Energiesenke 4b momentan nicht benötigt wird. Durch dieses Steuersignal s wird die Energieversorgung der Energiesenke 4b unterbrochen. Die Energieversorgung der Energiesenke 4b wird erst dann wieder aufgenommen, wenn die Energiesenke 4b wieder benötigt wird. Das Steuersignal s für den der Energiesenke 4c vorgeschalteten Schalter 8 wird dann bereitgestellt, wenn die Energiesenke 4c momentan nicht benötigt wird. Durch dieses Steuersignal s wird die Energieversorgung der Energiesenke 4c unterbrochen. Die Energieversorgung der Energiesenke 4c wird erst dann wieder aufgenommen, wenn die Energiesenke 4b wieder benötigt wird.

Durch diese Unterbrechung der Energieversorgung momentan nicht benötigter Energiesenken wird der Gesamtenergiebedarf des autonomen drahtlosen Sensorgerätes in vorteilhafter Weise reduziert.

Alternativ zu der Verwendung der Schalter 8 kann die Unterbrechung der Energieversorgung momentan nicht benötigter Energiesenken erfindungsgemäß auch dadurch vorgenommen werden, dass der der momentan nicht benötigten Energiesenke vorgeschaltete Gleichspannungswandler deaktiviert wird. Dies ist in der Figur 3 mit gestrichelten Linien angedeutet. So ist ersichtlich, dass bei dieser alternativen Ausführungsform dem der Energiesenke 4a vorgeschalteten Gleichspannungswandler 3a ein Steuersignal s zugeführt wird. Des Weiteren ist ersichtlich, dass bei dieser alternativen Ausführungsform dem der Energiesenke 4b vorgeschalteten Gleichspannungswandler 3b ebenfalls ein Steuersignal s zugeführt wird. Darüber hinaus ist ersichtlich, dass bei dieser alternativen Ausführungsform dem der Energiesenke 4c vorgeschaltetem Schalter 8 ebenfalls ein Steuersignal s zugeführt wird. Das Steuersignal s für den der Energiesenke 4a vorgeschalteten Gleichspannungswandler 3a wird von der Steuereinheit 9 dann bereitgestellt, wenn die Energiesenke 4a und auch die Energiesenke 4b momentan nicht benötigt werden. Durch dieses Steuersignal s wird der Gleichspannungswandler 3a deaktiviert. Dadurch wird auch die Energieversorgung der Energiesenken 4a und 4b unterbrochen. Die Energieversorgung der Energiesenken 4a und 4b wird durch eine Reaktivierung des Gleichspannungswandlers 3a erst dann wieder aufgenommen, wenn die Energiesenken 4a und 4b wieder benötigt werden. Das Steuersignal s für den der Energiesenke 4b vorgeschalteten Gleichspannungswandler 3b wird von der Steuereinheit 9 dann bereitgestellt, wenn die Energiesenke 4b nicht benötigt wird. Durch dieses Steuersignal s wird der Gleichspannungswandler 3b deaktiviert. Dadurch wird auch die Energieversorgung der Energiesenke 4b unterbrochen. Die Energieversorgung der Energiesenke 4b wird durch eine Reaktivierung des Gleichspannungswandlers 3b erst dann wieder aufgenommen, wenn die Energiesenke 4b wieder benötigt wird. Dies ermöglicht es, die Energieversorgung der Energiesenke 4b bei Aufrechterhaltung der Energieversorgung der Energiesenke 4a zu unterbrechen. Das Steuersignal s für den der Energiesenke 4c vorgeschalteten Gleichspannungswandler 3c wird von der Steuereinheit 9 dann bereitgestellt, wenn die Energiesenke 4c momentan nicht benötigt wird. Durch dieses Steuersignal s wird der Gleichspannungswandler 3c deaktiviert. Dadurch wird auch die Energieversorgung der Energiesenke 4c unterbrochen. Die Energieversorgung der Energiesenke 4c wird durch eine Reaktivierung des Gleichspannungswandlers 3c erst dann wieder aufgenommen, wenn die Energiesenke 4c wieder benötigt wird.

Die Energieversorgung der Steuerschaltung 9 ist in der Figur 3 nicht dargestellt. Sie kann beispielsweise direkt von der Energiequelle 2 aus erfolgen.

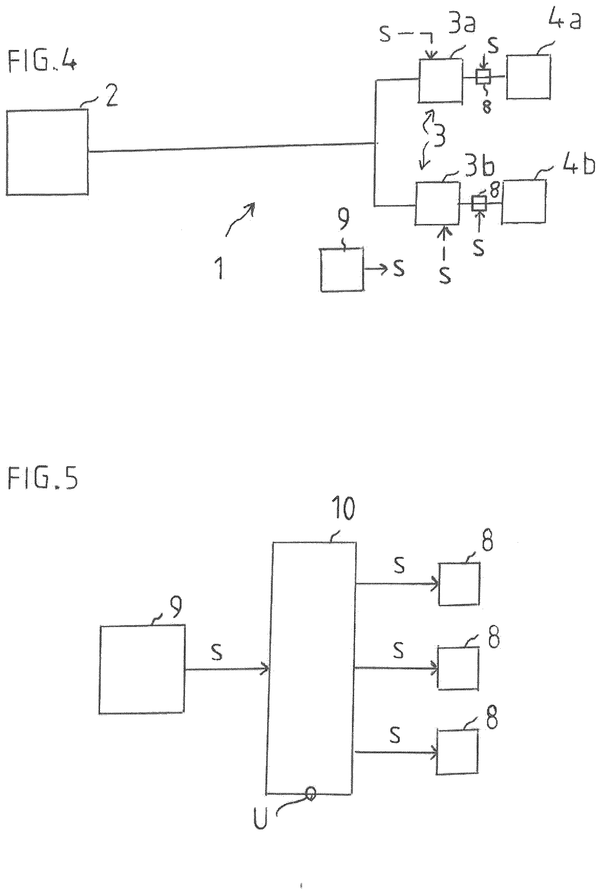

Die Figur 4 zeigt eine Blockdarstellung eines vierten Ausführungsbeispiels für ein autonomes drahtloses Sensorgerät gemäß der Erfindung. Dieses Sensorgerät 1 weist eine Energiequelle 2, eine Gleichspannungswandlerbaugruppe 3 und Energiesenken 4a und 4b auf. Bei der Energiequelle 2 handelt es sich um eine Primärbatterie. Am Ausgang der Energiequelle 2 steht eine Gleichspannung zur Verfügung, die der Gleichspannungswandlerbaugruppe 3 bereitgestellt wird. Diese Gleichspannungswandlerbaugruppe 3 weist beim gezeigten Ausführungsbeispiel zwei parallel zueinander angeordnete Gleichspannungswandler 3a und 3b auf. Jeder dieser Gleichspannungswandler stellt an seinem Ausgang eine andere Gleichspannung zur Verfügung.

An den Ausgang des Gleichspannungswandlers 3a ist eine Energiesenke 4a angeschlossen, an den Ausgang des Gleichspannungswandlers 3b eine Energiesenke 4b. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b.

Die minimal notwendige Versorgungsgleichspannung der Energiesenke 4a ist von der minimal notwendigen Versorgungsgleichspannung der Energiesenke 4b verschieden.

Folglich werden bei dem in der Figur 4 gezeigten Ausführungsbeispiel parallel zueinander vorgesehene Gleichspannungswandler dazu verwendet, eine von einer Primärbatterie bereitgestellte Gleichspannung in mehrere verschiedene Gleichspannungen umzuwandeln, wobei es sich bei diesen verschiedenen Gleichspannungen um von verschiedenen Bauteilen eines Sensorgerätes minimal benötigte Versorgungsgleichspannungen handelt.

Alternativ zu dem in der Figur 4 dargestellten Ausführungsbeispiel können an die Ausgänge der Gleichspannungswandler 3a und 3b auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Eine weitere Alternative zu dem in der Figur 4 dargestellten Ausführungsbeispiel besteht darin, drei oder mehr parallel zueinander angeordnete Gleichspannungswandler vorzusehen, um drei oder mehr verschiedene Gleichspannungen bereitzustellen, die jeweils einer oder mehreren Energiesenken bereitgestellt werden, um diese mit der jeweils benötigten minimalen Versorgungsgleichspannung zu versorgen.

Des Weiteren ist aus der Figur 4 ersichtlich, dass zwischen dem Gleichspannungswandler 3a und der Energiesenke 4a ein Schalter 8 vorgesehen ist, welchem ein Steuersignal s zugeführt wird. Dieses Steuersignal s wird von einer Steuereinheit 9 bereitgestellt.

Ferner ist aus der Figur 4 ersichtlich, dass zwischen dem Gleichspannungswandler 3b und der Energiesenke 4b ein weiterer Schalter 8 vorgesehen ist, welchem ebenfalls ein von der Steuereinheit 9 bereitgestelltes Steuersignal s zugeführt wird.

Diese Steuersignale s werden von der Steuereinheit 9 dann bereitgestellt, wenn die jeweilige Energiesenke nicht benötigt wird. So wird das Steuersignal s für den der Energiesenke 4a vorgeschalteten Schalter 8 dann bereitgestellt, wenn die Energiesenke 4a nicht benötigt wird. Durch dieses Steuersignal s wird die Energieversorgung der Energiesenke 4a unterbrochen. Die Energieversorgung der Energiesenke 4a wird erst dann wieder aufgenommen, wenn die Energiesenke 4a wieder benötigt wird. Das Steuersignal s für den der Energiesenke 4b vorgeschalteten Schalter 8 dann bereitgestellt, wenn die Energiesenke 4b nicht benötigt wird. Durch dieses Steuersignal s wird die Energieversorgung der Energiesenke 4b unterbrochen. Die Energieversorgung der Energiesenke 4b wird erst dann wieder aufgenommen, wenn die Energiesenke 4b wieder benötigt wird.

Durch diese Unterbrechung der Energieversorgung momentan nicht benötigter Energiesenken wird der Gesamtenergiebedarf des autonomen drahtlosen Sensorgerätes in vorteilhafter Weise reduziert.

Alternativ zu der Verwendung der Schalter 8 kann die Unterbrechung der Energieversorgung momentan nicht benötigter Energiesenken erfindungsgemäß auch dadurch vorgenommen werden, dass der der momentan nicht benötigten Energiesenke vorgeschaltete Gleichspannungswandler deaktiviert wird. Dies ist in der Figur 4 mit gestrichelten Linien angedeutet. So ist ersichtlich, dass bei dieser alternativen Ausführungsform dem der Energiesenke 4a vorgeschalteten Gleichspannungswandler 3a ein Steuersignal s zugeführt wird. Des Weiteren ist ersichtlich, dass bei dieser alternativen Ausführungsform dem der Energiesenke 4b vorgeschalteten Gleichspannungswandler 3b ebenfalls ein Steuersignal s zugeführt wird. Das Steuersignal s für den der Energiesenke 4a vorgeschalteten Gleichspannungswandler 3a wird von der Steuereinheit 9 dann bereitgestellt, wenn die Energiesenke 4a momentan nicht benötigt wird. Durch dieses Steuersignal s wird der Gleichspannungswandler 3a deaktiviert. Dadurch wird auch die Energieversorgung der Energiesenke 4a unterbrochen. Die Energieversorgung der Energiesenke 4a wird durch eine Reaktivierung des Gleichspannungswandlers 3a erst dann wieder aufgenommen, wenn die Energiesenke 4a wieder benötigt wird. Das Steuersignal s für den der Energiesenke 4b vorgeschalteten Gleichspannungswandler 3b wird von der Steuereinheit 9 dann bereitgestellt, wenn die Energiesenke 4b momentan nicht benötigt wird. Durch dieses Steuersignal s wird der Gleichspannungswandler 3b deaktiviert. Dadurch wird auch die Energieversorgung der Energiesenke 4b unterbrochen. Die Energieversorgung der Energiesenke 4b wird durch eine Reaktivierung des Gleichspannungswandlers 3b erst dann wieder aufgenommen, wenn die Energiesenke 4b wieder benötigt wird.

Die Energieversorgung der Steuerschaltung 9 ist in der Figur 4 nicht dargestellt. Sie kann beispielsweise direkt von der Energiequelle 2 aus erfolgen.

Die Figur 5 zeigt eine Blockdarstellung einer alternativen Ausführungsform für die Abschaltung der Energieversorgung momentan nicht benötigter Energiesenken. Bei dieser alternativen Ausführungsform führt die Steuereinheit 9 einem integrierten Schaltkreis 10 ein Steuersignal s zu. Der integrierte Schaltkreis 10 weist beim gezeigten Ausführungsbeispiel einen Betriebsspannungsanschluss U und drei Ausgänge auf. Jeder dieser Ausgänge ist mit einem Schalter 8 verbunden und führt diesem Schalter 8 ein Steuersignal s zu. Jedem der Schalter 8 ist eine nicht dargestellte Energiesenke nachgeschaltet. Durch das von der Steuereinheit 9 ausgegebene Steuersignal s wird dem integrierten Schaltkreis 10 mitgeteilt, welche der an die Schalter angeschlossenen Energiesenken momentan nicht benötigt werden. Der integrierte Schaltkreis 10 setzt diese Information um und stellt denjenigen Schaltern 8, die einer momentan nicht benötigten Energiesenke zugeordnet sind, ein Steuersignal s zur Verfügung, welches den jeweiligen Schalter 8 in seinen nicht leitenden Zustand bringt, so dass die Energieversorgung der dem jeweiligen Schalter nachgeschalteten Energiesenke unterbrochen ist. Wird dann zu einem späteren Zeitpunkt eine der Energiesenken, deren Betriebsspannungsversorgung unterbrochen ist, wieder benötigt, dann teilt die Steuereinheit 9 dem integrierten Schaltkreis 10 dies mit. Dieser stellt dann dem jeweiligen Schalter ein Steuersignal zur Verfügung, das diesen wieder in seinen leitenden Zustand bringt, so dass die Energieversorgung der jeweiligen Energiesenke wieder aufgenommen wird.

Bei den oben anhand der Figuren 1 bis 3 beschriebenen Ausführungsbeispielen wurde als Energiequelle jeweils ein Energiesammler beschrieben, welcher mindestens eine Photovoltaikzelle aufweist. Alternativ dazu kann jedoch als Energiesammler jeweils auch ein anderer Typ von Energiesammler verwendet werden, beispielsweise ein sogenannter Thermo-Harvester oder ein Induktiver-Harvester.

Bei den oben beschriebenen Gleichspannungswandlern der Gleichspannungswandlerbaugruppe 3 kann es sich um Aufwärtswandler, Abwärtswandler oder Längsregler oder um eine jeweils geeignete Kombination von Aufwärtswandlern Abwärtswandlern und Längsreglern handeln.

Bei den oben beschriebenen Ausführungsbeispielen wurde entweder eine Primärbatterie oder ein Energiesammler als Energiequelle verwendet. Alternativ dazu ist es auch möglich, als Energiequelle eine Primärbatterie und einen oder mehrere Energiesammler zu verwenden oder als Energiequelle mehrere Energiesammler zu verwenden.

Die vorstehend beschriebene Erfindung kann beispielsweise auch in den folgenden weiteren Anwendungsfällen verwendet werden:
In einem ersten weiteren Anwendungsfall ist die Steuereinheit 9, die in Form eines Mikrocomputers realisiert ist und einen internen Analog-Digital-Wandler aufweist, zur Messung einer Energieversorgungsspannung vorgesehen. Solange die Versorgungsspannung der Steuereinheit selbst kleiner ist als die von der Energiequelle 2 bereitgestellte Versorgungsspannung muss ein Spannungsteiler verwendet werden, um die gemessene Spannung an den Spannungsbereich des Analog-DigitalWandlers anzupassen. Da diese Spannungsmessungen nur in größeren zeitlichen Abständen von beispielsweise einigen Minuten oder einer ganzen Stunde durchgeführt werden, kann der genannte Spannungsteiler in den Zeiträumen, in denen die Spannungsmessungen nicht durchgeführt werden, unterbrochen werden, beispielsweise unter Verwendung eines analogen Schalt-ICs. In diesen Zeiträumen, in denen die Spannungsversorgung des Spannungsteilers unterbrochen ist, fließt lediglich der Leckstrom des Schalters, nicht aber der Leckstrom des Spannungsteilers. Der Leckstrom eines Schalters ist üblicherweise kleiner als der Leckstrom eines Spannungsteilers. Dadurch wird der insgesamt fließende Leckstrom reduziert und die Lebensdauer einer als Energiequelle verwendeten Primärbatterie erhöht.

In einem zweiten weiteren Anwendungsfall wird die Energieversorgung momentan nicht benötigter Sensoren unterbrochen. Eine typische Sensorelektronik hat einen durchschnittlichen Leistungsverbrauch, der kleiner ist als 100 µW. Eine kritische Komponente für den Leistungsverbrauch eines autonomen drahtlosen Sensorgerätes sind beispielsweise Kohlendioxid-sensoren und VOC-Sensoren (volatile organic compound). Derartige Sensoren haben für die meiste Zeit einen Leistungsverbrauch, der im aktiven Betrieb des Sensors größer ist als 100 mW und selbst in einem Niedrigenergiemodus größer ist als 20 µW. Um den Leckstrom in den Zeiträumen, in denen die genannten Sensoren nicht benötigt werden, zu reduzieren, wird gemäß der vorliegenden Erfindung deren Spannungsversorgung in den Zeiträumen, in denen diese Sensoren nicht benötigt werden, unterbrochen. Dabei kann beispielsweise ein LDO oder ein Transistor als Schalter benutzt werden. Dieser Schalter kann von einem digitalen Prozessor gesteuert werden, der die dazu notwendigen Informationen von außen über eine drahtlose Übertragungsstrecke von einem übergeordneten Prozessor erhält.

Die vorliegende Erfindung reduziert nach alledem den Leistungsverbrauch eines autonomen drahtlosen Sensorgerätes dadurch, dass die Energieversorgung momentan nicht benötigter Komponenten des autonomen drahtlosen Sensorgerätes in den Zeiträumen, in denen sie nicht benötigt werden, unterbrochen wird. Zu diesen Komponenten gehören beispielsweise Elektroniken, die Messungen betreffen, oder Funktionalitäten wie ein online-Software-Update. Das Ziel dieser Unterbrechungen der Versorgungsspannungen besteht stets darin, diese Komponenten nur dann mit einer Versorgungsspannung zu versorgen, wenn die jeweilige Komponente benötigt wird. Zu der genannten Unterbrechung der Spannungsversorgung können beispielsweise ein oder mehrere Schalter verwendet werden, die von einem digitalen Prozessor gesteuert werden, beispielsweise einem Mikrocomputer, einem DSP oder einem FPGA. Jede in Bezug auf den Energieverbrauch kritische Komponente, die keinen leistungseffizienten Niedrigenergiemodus hat, kann unter Verwendung eines derartigen Schalters von der Energieversorgung abgetrennt werden, wenn sie nicht benötigt wird.

Das Ein- oder Ausschalten der Spannungsversorgung einer elektronischen Komponente erfordert eine Rekonfiguration des Dateninterfaces zum digitalen Prozessor, beispielsweise einem Mikrocomputer. Beispielsweise werden dann, wenn eine dieser Komponenten wieder mit Energie versorgt werden soll, die Eingangs/Ausgangsanschlüsse des Mikrocomputers derart konfiguriert, dass sie ihre Normalbetriebsfunktion aufweisen. Wenn die jeweilige Komponente hingegen ausgeschaltet werden soll, dann müssen die genannten Eingangs/Ausgangsanschlüsse des Mikrocomputers hochohmig geschaltet werden.

### Bezugszeichenliste:

- 1: Autonomes drahtloses Sensorgerät
- 2: Energiequelle
- 3: Gleichspannungswandlerbaugruppe
- 3a: Gleichspannungswandler
- 3b: Gleichspannungswandler
- 3c: Gleichspannungswandler
- 4a: Energiesenke
- 4b: Energiesenke
- 4c: Energiesenke
- 5: Impedanzanpassungsmittel
- 6: Gleichspannungswandler
- 7: wiederaufladbarer Energiespeicher
- 8: Schalter
- 9: Steuereinheit
- 10: Integrierter Schaltkreis
- s: Steuersignal
- U: Spannungsversorgungsanschluss

## Patentansprüche

1. Autonomes drahtloses Sensorgerät (1), welches aufweist:
- eine Energiequelle (2),
- Energiesenken (4a, 4b, 4c) und
- Schaltmittel (9, 8, 3a, 3b, 3c, 10), mittels derer die Energieversorgung von Energiesenken unterbrechbar ist,
**dadurch gekennzeichnet, dass**
die Schaltmittel eine Steuereinheit (9) aufweisen, die zur Steuerung der Unterbrechung der Energieversorgung von momentan nicht benötigten Energiesenken ausgebildet ist, und
die Steuereinheit (9) dazu ausgebildet ist, die Energieversorgung der momentan nicht benötigten Energiesenken durch eine Deaktivierung eines der jeweils nicht benötigten Energiesenke vorgeschalteten Gleichspannungswandlers (3a, 3b, 3c) zu unterbrechen.

2. Autonomes drahtloses Sensorgerät nach Anspruch 1 bei welchem den Energiesenken (4a, 4b, 4c) eine mehrere Gleichspannungswandler aufweisende Gleichspannungswandlerbaugruppe (3) vorgeschaltet ist, wobei jede der Energiesenken (4a, 4b, 4c) an den Ausgang eines der Gleichspannungswandler angeschlossen ist.

3. Autonomes drahtloses Sensorgerät nach Anspruch 2, bei welchem die Gleichspannungswandlerbaugruppe (3) zwei oder mehr in Reihe geschaltete Gleichspannungswandler aufweist.

4. Autonomes drahtloses Sensorgerät nach Anspruch 2 oder 3, bei welchem die Gleichspannungswandlerbaugruppe (3) zwei oder mehr parallel zueinander geschaltete Gleichspannungswandler aufweist.

5. Autonomes drahtloses Sensorgerät nach einem der vorhergehenden Ansprüche, bei welchem die Energiequelle (2) eine Primärbatterie aufweist.

6. Autonomes drahtloses Sensorgerät nach einem der Ansprüche 1-4, bei welchem die Energiequelle (2) einen oder mehrere Energiesammler aufweist.

7. Autonomes drahtloses Sensorgerät nach Anspruch 6, welches aufweist:
- einen an den Energiesammler (2) angeschlossenen Powermanager (5,6) und
- einen an den Powermanager (5, 6) angeschlossenen wiederaufladbaren Energiespeicher (7), wobei
- der wiederaufladbare Energiespeicher (7) über die Gleichspannungswandlerbaugruppe (3) direkt oder über jeweils einen einer Energiesenke vorgeschalteten Schalter (8) an die jeweilige Energiesenke angeschlossen ist.

8. Autonomes drahtloses Sensorgerät nach Anspruch 7, bei welchem der Powermanager Impedanzanpassungsmittel (5) und einen Gleichspannungswandler (6) aufweist und der Energiesammler (2) über die Impedanzanpassungsmittel (5) und den Gleichspannungswandler (6) mit dem wiederaufladbaren Energiespeicher (7) verbunden ist.

9. Autonomes drahtloses Sensorgerät nach einem der vorhergehenden Ansprüche, bei welchem der Gesamtenergiebedarf der Energiesenken im Bereich von 10 µW bis 1 mW liegt.

10. Verwendung eines autonomen drahtlosen Sensorgerätes nach einem der vorhergehenden Ansprüche im Bereich der Gebäudeautomation.

## Claims

1. Autonomous wireless sensor device (1), which has:
- an energy source (2),
- energy sinks (4a, 4b, 4c) and
- switching means (9, 8, 3a, 3b, 3c, 10), by means of which the energy supply to energy sinks is interruptible, **characterized in that**
the switching means have a control unit (9), which is designed to control the interruption of the energy supply to energy sinks that are not currently required, and
the control unit (9) is designed to interrupt the energy supply to the energy sinks that are not currently required by deactivating a DC-DC converter (3a, 3b, 3c) that is arranged upstream of the particular energy sink that is not required.

2. Autonomous wireless sensor device according to Claim 1, in which a DC-DC converter assembly (3) having a plurality of DC-DC converters is arranged upstream of the energy sinks (4a, 4b, 4c), wherein each of the energy sinks (4a, 4b, 4c) is connected to the output of one of the DC-DC converters.

3. Autonomous wireless sensor device according to Claim 2, in which the DC-DC converter assembly (3) has two or more DC-DC converters connected in series.

4. Autonomous wireless sensor device according to Claim 2 or 3, in which the DC-DC converter assembly (3) has two or more DC-DC converters connected in parallel with each other.

5. Autonomous wireless sensor device according to one of the preceding claims, in which the energy source (2) has a primary battery.

6. Autonomous wireless sensor device according to one of Claims 1-4, in which the energy source (2) has one or more energy collectors.

7. Autonomous wireless sensor device according to Claim 6, which has:
- a power manager (5, 6) connected to the energy collector (2) and
- a rechargeable energy store (7) connected to the power manager (5, 6), wherein
- the rechargeable energy store (7) is connected to the respective energy sink by way of the DC-DC converter assembly (3) directly or by way of a particular switch (8) that is arranged upstream of an energy sink.

8. Autonomous wireless sensor device according to Claim 7, in which the power manager has impedance matching means (5) and a DC-DC converter (6) and the energy collector (2) is connected to the rechargeable energy store (7) by way of the impedance matching means (5) and the DC-DC converter (6).

9. Autonomous wireless sensor device according to one of the preceding claims, in which the total energy demand of the energy sinks is in the range from 10 µW to 1 mW.

10. Use of an autonomous wireless sensor device according to one of the preceding claims in the field of building automation.

## Revendications

1. Appareil capteur (1) sans fil autonome, lequel possède :
- une source d'énergie (2),
- des puits d'énergie (4a, 4b, 4c) et
- des moyens de commutation (9, 8, 3a, 3b, 3c, 10) au moyen desquels l'alimentation énergie des puits d'énergie peut être interrompue,
**caractérisé en ce que**
les moyens de commutation possèdent une unité de commande (9) qui est configurée pour la commande de l'interruption de l'alimentation en énergie des puits d'énergie momentanément non nécessaires et
l'unité de commande (9) est configurée pour interrompre l'alimentation en énergie des puits d'énergie momentanément non nécessaires par une désactivation d'un convertisseur de tension continue (3a, 3b, 3c) branché en amont du puits d'énergie respectivement non nécessaire.

2. Appareil capteur sans fil autonome selon la revendication 1, avec lequel un module convertisseur de tension continue (3) possédant plusieurs convertisseurs de tension continue est branché en amont des puits d'énergie (4a, 4b, 4c), chacun des puits d'énergie (4a, 4b, 4c) étant raccordé à la sortie de l'un des convertisseurs de tension continue.

3. Appareil capteur sans fil autonome selon la revendication 2, avec lequel le module convertisseur de tension continue (3) possède deux convertisseurs de tension continue ou plus branchés en série.

4. Appareil capteur sans fil autonome selon la revendication 2 ou 3, avec lequel le module convertisseur de tension continue (3) possède deux convertisseurs de tension continue ou plus branchés en parallèle les uns avec les autres.

5. Appareil capteur sans fil autonome selon l'une des revendications précédentes, avec lequel la source d'énergie (2) possède une batterie primaire.

6. Appareil capteur sans fil autonome selon l'une des revendications 1 à 4, avec lequel la source d'énergie (2) possède un ou plusieurs collecteurs d'énergie.

7. Appareil capteur sans fil autonome selon la revendication 6, lequel possède :
- un gestionnaire de puissance (5, 6) raccordé aux collecteurs d'énergie (2) et
- un accumulateur d'énergie (7) rechargeable raccordé au gestionnaire de puissance (5, 6),
- l'accumulateur d'énergie (7) rechargeable étant raccordé au puits d'énergie respectif par le biais du module convertisseur de tension continue (3) directement ou respectivement par le biais d'un commutateur (8) branché en amont d'un puits d'énergie.

8. Appareil capteur sans fil autonome selon la revendication 7, avec lequel le gestionnaire de puissance possède des moyens d'adaptation d'impédance (5) et un convertisseur de tension continue (6) et le collecteur d'énergie (2) est relié à l'accumulateur d'énergie (7) rechargeable par le biais des moyens d'adaptation d'impédance (5) et du convertisseur de tension continue (6) .

9. Appareil capteur sans fil autonome selon l'une des revendications précédentes, avec lequel le besoin d'énergie total des puits d'énergie est compris dans la plage de 10 µW à 1 mW.

10. Utilisation d'un appareil capteur sans fil autonome selon l'une des revendications précédentes dans le domaine de l'automatisation des bâtiments.
